# FASCICULE DE BREVET EUROPEEN

(11) **EP 1 635 682 B1**
(45) Date de publication et mention de la délivrance du brevet: **08.08.2007**
(21) Numéro de dépôt: 04767326.4
(22) Date de dépôt: 11.06.2004
(51) Int. Cl.: A47J 36/38

(54) **CONDENSEUR POUR APPAREIL DE CUISSON**
KOCHGERÄTKONDENSATOR
COOKING APPLIANCE CONDENSER

(30) Priorité: 12.06.2003 FR 0307054
(43) Date de publication de la demande: 22.03.2006
(73) Titulaire: THERMAGEN S.A., 91198 Gif-sur-Yvette (FR)
(72) Inventeur: JEUCH, Pierre, F-91190 Saint-Aubin (FR)
(74) Mandataire: Hirsch & Associés
(86) Numéro de dépôt international: PCT/FR2004/001461
(87) Numéro de publication internationale: WO 2004/110231

(56) Documents cités:
- WO-A-94/23626
- DE-A- 19 711 709
- DE-B- 1 241 800
- GB-A- 2 298 376
- US-A- 4 957 520

## Description

La présente invention concerne les appareils de cuisson, tels que par exemple les friteuses à usage ménager.

De tels appareils comprennent une cuve de cuisson placée dans un boîtier fermé par un couvercle pendant la phase de cuisson.

Lors de la cuisson, en particulier de friture, une grande quantité d'eau est évaporée, générant d'importantes vapeurs de cuisson. Par exemple, dans le cas de frites congelées, plus de 30% en masse des frites crues est transformée en vapeur d'eau. Cette vapeur d'eau est en outre chargée de particules d'huile qui produisent l'odeur caractéristique de friture, généralement considérée comme inopportune.

Pour palier au problème des odeurs inopportunes, les fabricants de friteuses ont mis en oeuvre des systèmes de filtres adaptés pour laisser passer la vapeur d'eau et retenir les particules d'huile. L'efficacité de ces filtres n'est cependant pas parfaite. Le volume de vapeur à filtrer est en effet important, plus de 500 litres de vapeur d'eau sont dégagés pour 1kg de frites.

Pour remédier à cet inconvénient, il a été proposé des appareils de cuisson totalement étanches équipés d'un condenseur. La totalité de la vapeur d'eau générée par la cuisson est condensée à l'intérieur de l'appareil au moyen d'une surface refroidie à cet effet.

Un tel appareil est connu du document WO 94/23626. Le condenseur est constitué par deux cassettes d'eau préalablement congelées et disposées de manière à former un chemin de condensation pour les vapeurs de cuisson dégagées par la cuve de cuisson, un réservoir de condensat étant disposé à l'extrémité de ce chemin.

Cette solution nécessite cependant de devoir congeler les cassettes de condensation. Par ailleurs l'efficacité du transfert de chaleur entre la masse d'eau congelée et la surface où se produit la condensation est limitée. Ainsi, il est indispensable de combiner cette solution de condensation partielle avec un filtre classique des vapeurs de cuisson.

Il est également connu du document US 2003/0029323 A1, un appareil de cuisson muni d'un condenseur constitué par une surface refroidie par convection dans l'air extérieur. Cependant, même avec un échangeur de chaleur à ailettes, cette solution exige un important débit d'air pour évacuer la puissance produite par la condensation, compte tenu de la faible capacité calorifique de l'air.

La puissance à évacuer par le condenseur est de 2.5kJ par gramme d'eau condensée. Pour condenser 300g de vapeur d'eau en 5 minutes, il faut donc une puissance d'évacuation de 2.5kW. En utilisant la convection d'air comme vecteur de refroidissement, sachant que la capacité calorifique de l'air est de 1J/g et qu'un gramme d'air correspond à un volume de un litre, il faut un débit d'air de 200m³/h pour réaliser la condensation des 300g d'eau en 5 minutes. Cela nécessite l'utilisation d'un gros ventilateur encombrant et bruyant.

La présente invention entend résoudre les inconvénients de l'art antérieur et propose un dispositif permettant de condenser les vapeurs de cuisson au moyen d'un refroidissement de la surface de condensation assurée par évaporation d'eau.

L'invention concerne plus précisément un appareil de cuisson comprenant les caractéristiques techniques de la revendication 1.

Selon un mode de réalisation, l'appareil comprend un réservoir d'eau adapté à mouiller l'évaporateur.

Selon une caractéristique, l'appareil comprend un bac de condensation.

Selon un mode de réalisation, l'évaporateur évapore l'eau condensée par le condenseur.

Selon un mode de réalisateur, l'appareil comprend un support poreux, une première face du support comprenant le condenseur et une seconde face du support comprenant l'évaporateur.

Selon une caractéristique, le support poreux est adapté à transporter l'eau par capillarité depuis la première face vers la seconde face.

Selon une caractéristique, le support comprend une pièce métallique.

Selon les modes de réalisation, la pièce métallique du support poreux est en aluminium ou en métal fritté.

Selon une caractéristique, la pièce métallique du support poreux comprend des alvéoles constituées de micro perforations.

Selon un mode de réalisation, le support comprend une grille métallique.

Selon une caractéristique, le support comprend une couche poreuse hydrophile.

Selon une caractéristique, l'appareil comprend en outre un ventilateur.

Selon une caractéristique, l'appareil comprend en outre un clapet de surpression.

Selon une caractéristique, l'appareil comprend en outre un filtre.

Les particularités et avantages de la présente invention seront mieux comprises à l'aide de la description qui suit donnée à titre d'exemple illustratif et non limitatif, et faite en référence aux figures annexées qui représentent:
- la figure 1, une vue schématique d'un appareil de cuisson selon l'invention;
- la figure 2, un schéma du condenseur/évaporateur selon un mode de réalisation de l'invention;
- la figure 3, un schéma de l'agencement du condenseur/évaporateur de la figure 2 vue de dessus;
- la figure 4, un schéma de l'agencement du condenseur/évaporateur de la figure 2 vue de côté.

Selon l'invention, un condenseur est disposé dans un appareil de cuisson pour condenser la quasi-totalité des vapeurs dégagées par la cuisson. La surface de condensation est refroidie par évaporation d'eau. La forte chaleur latente d'évaporation de l'eau permet d'assurer une bonne efficacité de refroidissement.

Ainsi, pour condenser 300g de vapeurs d'eau, il suffit d'évaporer 300g d'eau. De la vapeur d'eau sera donc dégagée du dispositif de condensation de l'appareil de cuisson selon l'invention, mais cette vapeur proviendra d'un évaporateur et non de la cuisson et ne sera pas chargée en particules inopportunes, telles que des particules d'huile.

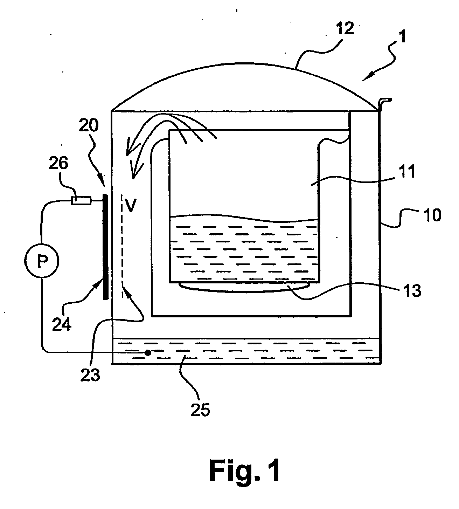

En référence à la figure 1, un appareil de cuisson 1 comprend une cuve 11 de cuisson chauffée par une résistance 13 et disposée dans un boîtier 10 fermé par un couvercle 12. Lors de la cuisson, des vapeurs V sont dégagées de la cuve 11, essentiellement de la vapeur d'eau.

Un dispositif de condensation 20 de cette vapeur d'eau est disposé dans l'appareil, sur une face latérale du boîtier ou dans le couvercle.

Le dispositif de condensation comprend un condenseur, c'est-à-dire une surface froide 23, interne à l'appareil, sur laquelle la vapeur d'eau V dégagée par la cuisson se condense pour former des gouttes d'eau, éventuellement chargées d'huile dans le cas d'une friteuse. Le condensat de vapeur peut être récupéré dans un bac de condensation 25.

Le dispositif de condensation comprend également un évaporateur, c'est-à-dire une surface de refroidissement 24 sur laquelle de l'eau s'évapore. La surface de l'évaporateur 24 est disposée pour refroidir la surface de condensation 23. L'évaporateur comprend un réservoir d'eau 26 à évaporer disposé pour mouiller la surface de refroidissement 24. Le réservoir peut être intégré à l'appareil. La chaleur latente d'évaporation de l'eau est de 2.5kJ/g, et un gramme d'eau représente un volume de 1ml. Le réservoir d'évaporateur ne contient donc que 300ml d'eau.

Le réservoir d'évaporation 26 peut également communiquer avec le bac de condensation 25 et utiliser une partie de l'eau condensée pour l'évaporation. L'eau condensée est alors filtrée et pompée pour être évaporée sur la surface externe de refroidissement 24.

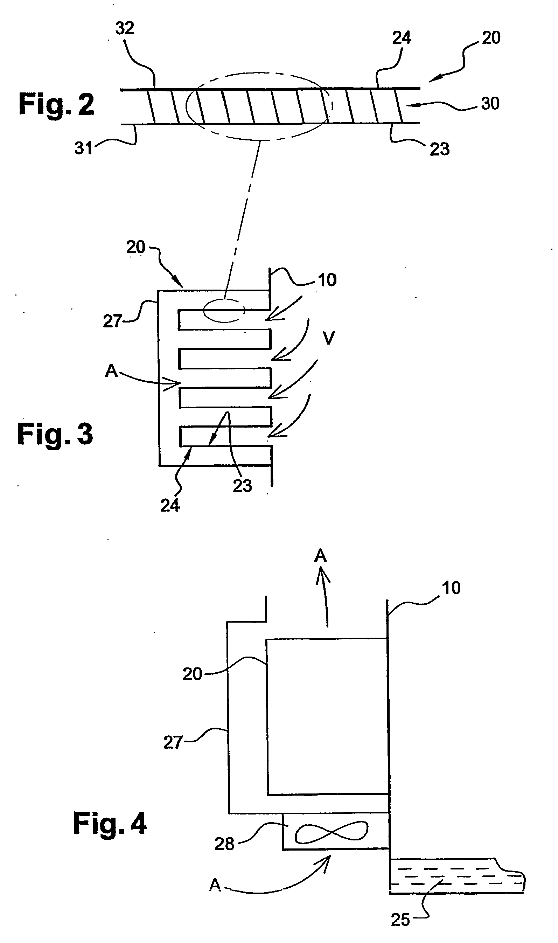

Selon un mode de réalisation, dont une illustration est donnée sur la figure 2, le dispositif de condensation 20 comprend un support 30 en matériau poreux. Une première face 31 du support constitue la face de condensation 23 et une seconde face 32 constitue la surface d'évaporation 24.

La surface d'évaporation 24 peut être recouverte d'une couche poreuse hydrophile assurant que la surface d'évaporation est toujours bien mouillée afin de garantir une évaporation d'eau et un bon refroidissement de la surface de condensation 23.

Le support 30 peut être une pièce métallique poreuse et hydrophile, telle qu'une pièce en aluminium par exemple percée de micro perforations (de l'ordre de 2-3/10 mm) créant des alvéoles ou une pièce en métal fritté.

Le métal du support 30 permet une bonne conduction thermique entre les surfaces interne (à refroidir) et externe (de refroidissement); et la porosité du matériau du support 30 permet d'assurer un drainage capillaire entre la surface de condensation 23 et la surface d'évaporation 24. La porosité du matériau du support 30 est telle que les molécules d'eau traversent le support, absorbées par la couche hydrophile de la surface d'évaporation 24, mais que les particules d'huile sont retenues à l'intérieur de l'appareil de cuisson par la pièce poreuse 30 qui sert de filtre.

La présence d'un réservoir 26 et d'un bac de condensation 25 ne sont donc pas indispensables, l'évaporateur 24 pouvant être mouillé directement par capillarité avec l'eau condensée sur la surface de condensation 23.

Cette pièce de support métallique 30 peut avantageusement être démontée de l'appareil et lavée dans un lave-vaisselle par exemple pour éliminer les particules d'huile retenues sur ce support.

Le support 30 peut également être constitué d'une grille de support, métallique, associée à un papier filtre disposé du côté de la surface de condensation 23, c'est à dire du côté de la surpression.

Les figures 3 et 4 illustrent respectivement une vue de dessus et de côté d'un agencement possible du support de la figure 2.

Le support 30 du condenseur 20 selon l'invention peut être replié en peigne afin d'occuper un volume réduit tout en assurant une surface d'évaporation/condensation suffisante. Par exemple, avec une surface d'échange de 0.25m², soit 12 sections de 10*20cm² et un débit d'évaporation de 1g/s, 300g d'eau sont condensés en 5 minutes.

Le boîtier 10 de l'appareil de cuisson peut présenter, par exemple sur une paroi latérale, un caisson 27 contenant l'évaporateur/condenseur 20. Une circulation d'air A est assurée dans ce caisson 27 afin d'assurer l'évaporation de la surface mouillée de l'évaporateur 24. La surface d'évaporation 24 est exposée à un flux d'air par un petit ventilateur 28 qui accentue la vitesse d'évaporation et donc de refroidissement. Pour évaporer 1 gramme d'eau par seconde, il suffit d'un débit d'air à 50°C de 25m³/h, un ventilateur de faible puissance, par exemple 0.5W suffit.

On va maintenant décrire le fonctionnement du dispositif de refroidissement selon le mode de réalisation illustré sur les figures 2 à 4.

Au démarrage, l'évaporateur 24 et le condenseur 23 sont à environ 25°C. Le ventilateur est en marche, par exemple automatiquement lors de la mise en fonction de l'appareil de cuisson. Dès le début de la cuisson, la condensation sur la surface froide du condenseur 23 (à 25°C) élève la température du support 30 de l'évaporateur/condensateur 20 tout en mouillant la surface de condensation 23 par le condensat. La surface de l'évaporateur 24 est alors aussitôt mouillée par transfert capillaire dans le support poreux 30.

Le flux d'air A généré par le ventilateur 28 sur la surface d'évaporation 24 fait évaporer l'eau et refroidit cette surface. Ce refroidissement est conduit par le support 30 vers la surface de condensation 23.

L'évaporation se fait d'autant plus rapidement que la surface d'évaporation 24 s'échauffe. En effet, à 25°C, un litre d'air emporte 0.03 litre de vapeur d'eau, alors qu'à 80°C, un litre d'air emporte un litre de vapeur d'eau. Lorsque le débit de vapeur d'eau générée par la cuisson diminue, la température baisse et il s'établit à tout moment un équilibre entre la quantité d'eau condensée et celle d'eau évaporée. La température du support 30 s'ajuste en fonction de la quantité d'eau évacuée par le flux d'air, due à la pression de vapeur d'eau saturante dans ce flux d'air.

En fin de cuisson, la température du condenseur 23 redevient proche de la température ambiante, ce qui permet de sécher l'intérieur de la cuve de cuisson 11 et le couvercle 12 par transfert de l'eau condensée sur les autres parois de l'appareil vers le condenseur 23 refroidi.

Il peut être avantageux de disposer un petit frein de la descente du panier de cuisson dans la cuve 11 afin de limiter le très fort dégagement de vapeur initial et les importantes giclées d'huile lorsque le produit à cuire est plongé dans la cuve 11.

Par sécurité, il est préférable de prévoir dans l'appareil de cuisson un clapet de surpression. Ainsi, si pour des raisons de conditions externes, telles qu'une humidité importante ou une chaleur excessive, l'évaporateur selon l'invention ne parvient pas à condenser suffisamment les vapeurs de cuisson, ces vapeurs doivent être évacuées selon des méthodes classiques de filtrage des vapeurs.

## Revendications

1. Appareil de cuisson (1) comprenant une cuve de cuisson (11) disposée dans un boîtier (10) fermé par un couvercle (12) pendant la phase de cuisson, **caractérisé en ce que** l'appareil comprend outre:
- un condenseur (23) de la vapeur d'eau (V) générée par la cuisson disposé dans le boîtier (10) ; et
- un évaporateur d'eau (24) adapté à refroidir le condenseur.

2. Appareil de cuisson selon la revendication 1, **caractérisé en ce qu'**il comprend un réservoir d'eau (26) adapté à mouiller l'évaporateur (24).

3. Appareil de cuisson selon l'une des revendications 1 à 2, **caractérisé en ce qu'**il comprend un bac de condensation (25).

4. Appareil de cuisson selon l'une des revendications 1 à 3, **caractérisé en ce que** l'évaporateur (24) évapore l'eau condensée par le condenseur (23).

5. Appareil de cuisson selon l'une des revendications 1 à 4, **caractérisé en ce qu'**il comprend un support poreux (30), une première face (31) du support comprenant le condenseur (23) et une seconde face (32) du support comprenant l'évaporateur (24).

6. Appareil de cuisson selon la revendication 5, **caractérisé en ce que** le support poreux (30) est adapté à transporter l'eau par capillarité depuis la première face (31) vers la seconde face (32).

7. Appareil de cuisson selon l'une des revendications 5 à 6, **caractérisé en ce que** le support (30) comprend une pièce métallique.

8. Appareil de cuisson selon la revendication 7, **caractérisé en ce que** la pièce métallique du support poreux est en aluminium.

9. Appareil de cuisson selon la revendication 7, **caractérisé en ce que** la pièce métallique du support poreux est en métal fritté.

10. Appareil de cuisson selon l'une des revendications 7 a 9, **caractérisé en ce que** la pièce métallique du support poreux comprend des alvéoles constituées de micro perforations.

11. Appareil de cuisson selon l'une des revendications 5 à 6, **caractérisé en ce que** le support (30) comprend une grille métallique.

12. Appareil de cuisson selon l'une des revendications 5 à 11, **caractérisé en ce que** le support (30) comprend une couche poreuse hydrophile.

13. Appareil de cuisson selon l'une des revendications 1 à 12, **caractérise en ce qu'**il comprend en outre un ventilateur (28).

14. Appareil de cuisson selon l'une des revendications 1 à 13, **caractérisé en ce qu'**il comprend en outre un clapet de surpression.

15. Appareil de cuisson selon l'une des revendications 1 à 14, **caractérisé en ce qu'**il comprend en outre un filtre.

## Claims

1. Cooking appliance (1) comprising a cooking vat (11) arranged in a casing (10) closed by a lid (12) during the cooking phase, **characterized in that** the appliance further comprises:
- a condenser (23) for the steam (V) generated by cooking;
- a water evaporator (24) which is able to cool the condenser.

2. Cooking appliance according to claim 1, **characterized in that** it comprises a water container (26) which is able to moisten the evaporator (24).

3. Cooking appliance according to one of claims 1 to 2, **characterized in that** it comprises a condensation container (25).

4. Cooking appliance according to one of claims 1 to 3, **characterized in that** the evaporator (24) evaporates the water condensed by the condenser (23).

5. Cooking appliance according to one of claims I to 4, **characterized in that** it comprises a porous support (30), a first face (31) of the support comprising the condenser (23) and a second face (32) of the support comprising the evaporator (24).

6. Cooking appliance according to claims 5, **characterized in that** the porous support (30) is able to transport the water by capillary action from the first face (31) to the second face (32).

7. Cooking appliance according to one of claims 5 to 6, **characterized in that** the support (30) comprises a metal part.

8. Cooking appliance according to claim 7, **characterized in that** the metal part of the porous support is made of aluminium.

9. Cooking appliance according to claim 7, **characterized in that** the metal part of the porous support is made of sintered metal.

10. Cooking appliance according to one of claims 7 to 9, **characterized in that** the metal part of the porous support comprises cells constituted by microperforations.

11. Cooking appliance according to one of claims 5 to 6, **characterized in that** the support (30) comprises a metal grid.

12. Cooking appliance according to one of claims 5 to 11, **characterized in that** the support (30) comprises a hydrophilic porous layer.

13. Cooking appliance according to one of claims 1 to 12, **characterized in that** it also comprises a fan (28).

14. Cooking appliance according to one of claims 1 to 13, **characterized in that** it also comprises a pressure relief valve.

15. Cooking appliance according to one of claims 1 to 14, **characterized in that** it also comprises a filter.

## Patentansprüche

1. Kochgerät (1), umfassend eine Kochwanne (11), die in einem Gehäuse (10), das von einem Deckel (12) während der Kochphase verschlossen ist, angeordnet ist, **dadurch gekennzeichnet, dass** das Gerät ferner umfasst:
- einen Kondensator (23) des durch das Kochen erzeugten Wasserdampfes (V), der im Gehäuse (10) angeordnet ist; und
- einen Wasserverdampfer (24), der zur Kühlung des Kondensators vorgesehen ist.

2. Kochgerät nach Anspruch 1, **dadurch gekennzeichnet, dass** es einen Wasserbehälter (26) umfasst, der zur Befeuchtung des Verdampfers (24) vorgesehen ist.

3. Kochgerät nach einem der Ansprüche 1 bis 2, **dadurch gekennzeichnet, dass** es einen Kondensationsbehälter (25) umfasst.

4. Kochgerät nach einem der Ansprüche 1 bis 3, **dadurch gekennzeichnet, dass** der Verdampfer (24) das vom Kondensator (23) kondensierte Wasser verdampft.

5. Kochgerät nach einem der Ansprüche 1 bis 4, **dadurch gekennzeichnet, dass** es einen porösen Träger (30) umfasst, wobei eine erste Seite (31) des Trägers den Kondensator (23) und eine zweite Seite (32) des Trägers den Verdampfer (24) umfasst.

6. Kochgerät nach Anspruch 5, **dadurch gekennzeichnet, dass** der poröse Träger (30) dazu vorgesehen ist, das Wasser durch Kapillarität von der ersten Seite (31) zur zweiten Seite (32) zu transportieren.

7. Kochgerät nach einem der Ansprüche 5 bis 6, **dadurch gekennzeichnet, dass** der Träger (30) einen Metallteil umfasst.

8. Kochgerät nach Anspruch 7, **dadurch gekennzeichnet, dass** der Metallteil des porösen Trägers aus Aluminium ist.

9. Kochgerät nach Anspruch 7, **dadurch gekennzeichnet, dass** der Metallteil des porösen Trägers aus Sintermetall ist.

10. Kochgerät nach einem der Ansprüche 7 bis 9, **dadurch gekennzeichnet, dass** der Metallteil des porösen Trägers Alveolen umfasst, die von Mikroperforationen gebildet sind.

11. Kochgerät nach einem der Ansprüche 5 bis 6, **dadurch gekennzeichnet, dass** der Träger (30) ein Metallgitter umfasst.

12. Kochgerät nach einem der Ansprüche 5 bis 11, **dadurch gekennzeichnet, dass** der Träger (30) eine hydrophile poröse Schicht umfasst.

13. Kochgerät nach einem der Ansprüche 1 bis 12, **dadurch gekennzeichnet, dass** es ferner einen Ventilator (28) umfasst.

14. Kochgerät nach einem der Ansprüche 1 bis 13, **dadurch gekennzeichnet, dass** es ferner eine Überdruckklappe umfasst.

15. Kochgerät nach einem der Ansprüche 1 bis 14, **dadurch gekennzeichnet, dass** es ferner einen Filter umfasst.
